# EUROPEAN PATENT SPECIFICATION

(11) **EP 3 153 787 B1**
(45) Date of publication and mention of the grant of the patent: **07.02.2018**
(21) Application number: 15188532.4
(22) Date of filing: 06.10.2015
(51) Int. Cl.: F24F 12/00, F24F 13/20

(54) **DUCT-TYPE HEAT EXCHANGER SYSTEM**
KANALWÄRMETAUSCHERSYSTEM
SYSTÈME ÉCHANGEUR DE CHALEUR DE TYPE CANAL

(43) Date of publication of application: 12.04.2017
(73) Proprietor: Daikin Europe N.V., 8400 Oostende (BE); Daikin Industries, Ltd., Osaka 530-8323 (JP)
(72) Inventor: Baetens, Frans, 8400 Oostende (BE); Pirmez, Pieter, 8400 Oostende (BE); Vanooteghem, Jan, 8400 Oostende (BE)
(74) Representative: Hoffmann Eitle

(56) References cited:
- EP-A1- 2 314 941
- WO-A1-2008/105586
- US-A- 5 490 557

## Description

### Technical Field

The present invention relates to a duct-type heat exchanger system and particularly to a duct-type heat exchanger system with a housing stop member, a housing guide member, a heat exchanger stop member and a heat exchanger guide member.

### Background

Typically, a duct-type heat exchanger system includes a housing and a heat exchanger. The heat exchanger may be mountable in the housing and the housing may support the heat exchanger. In many uses, the housing of the duct-type heat exchanger system is permanently mounted in a false ceiling or a wall, such that the housing itself cannot easily be removed. Accordingly, during maintenance of the duct-type heat exchanger system, the housing together with the heat exchanger is normally not removed from the false ceiling or wall. As the heat exchanger is a component which requires maintenance, during servicing of the duct-type heat exchanger system the heat exchanger may be removed from the housing such that servicing can be performed on the heat exchanger. However, as the heat exchanger is typically a relatively heavy component (in the range of 20 Kg), and a very delicate component, the remounting of the heat exchanger in the housing may prove problematic. For example, when the housing is mounted on a false ceiling or wall, positioning of the heat exchanger relative to the housing may prove difficult, and, furthermore, in the process of correctly positioning the heat exchanger may cause damage to the heat exchanger.

US 5490557 discloses a duct-type heat exchanger system comprising a housing comprising a housing guide member; and a heat exchanger comprising a heat exchanger guide member (see corners of heat exchanger), wherein:the housing is configured such that the heat exchanger is at least partially insertable into the housing by a translation in a first direction of the heat exchanger relative to the housing. In view of the above, there is a need for a duct-type heat exchanger system with improved capabilities for mounting the heat exchanger in the housing.

### Summary of the Invention

Accordingly, it is an object of the present invention to provide a duct-type heat exchanger system with improved capabilities for mounting the heat exchanger in the housing.

This objective is achieved with a duct-type heat exchanger system with the technical features of Claim 1. Preferred embodiments are recited in the dependent claims.

According to the present invention, there is provided a duct-type heat exchanger system. The duct-type heat exchanger system comprises a housing and a heat exchanger. The housing comprises a housing stop member and a housing guide member. The heat exchanger comprises a heat exchanger stop member and a heat exchanger guide member. The housing is configured such that the heat exchanger is at least partially insertable into the housing by a translation in a first direction of the heat exchanger relative to the housing. The housing stop member and the heat exchanger stop member are configured to be releasably attachable to each other. The housing guide member and the heat exchanger guide member are configured to guide the heat exchanger stop member and the housing stop member into alignment with each other as the heat exchanger is translated in the first direction relative to the housing.

Throughout this disclosure, the term 'duct-type heat exchanger system' refers to a system in which air may enter the system via a first duct, is conditioned by the heat exchanger, and leaves the system via a second duct. Such duct-type heat exchanger systems may be mounted indoors such as within a false ceiling or a wall.

The heat exchanger is at least partially insertable into the housing such that the housing surrounds at least a portion of the heat exchanger. The heat exchanger is at least partially insertable into the housing by a translation in a first direction of the heat exchanger relative to the housing. Accordingly, a movement of the heat exchanger along the first direction relative to the housing may result in the heat exchanger being at least partially inserted into the housing.

The housing stop member and the heat exchanger stop member are configured to be releasably attachable to each other. When the housing stop member and the heat exchanger stop member are attached to each other, relative movement between the housing stop member and the heat exchanger stop member is limited.

Throughout this disclosure, any reference to a state in which 'the heat exchanger is at least partially inserted into the housing' refers to a state in which 'the heat exchanger is at least partially inserted into the housing such that the housing stop member and the heat exchanger stop member may be attached to each other'.

The housing guide member and the heat exchanger guide member are configured to guide the heat exchanger stop member and the housing stop member into alignment with each other as the heat exchanger is translated in the first direction relative to the housing. As the heat exchanger is translated in the first direction relative to the housing, the housing guide member and the heat exchanger guide member cooperate with each other to guide the heat exchanger and the heat exchanger stop member into alignment with the housing and the housing stop member, respectively.

During remounting of the heat exchanger in the housing, initially the heat exchanger may be approximately aligned with the housing such that the housing guide member and the heat exchanger guide member are approximately aligned with each other. Then, the heat exchanger may be translated in the first direction relative to the housing. Once the housing guide member and the heat exchanger guide member come into contact with one another, they cooperate with each other to further align the heat exchanger and the heat exchanger stop member into alignment with the housing and the housing stop member, respectively.

Hence, with such a configuration, it is possible to provide a duct-type heat exchanger system with improved capabilities for mounting the heat exchanger within the housing.

In one embodiment, the housing guide member and the heat exchanger guide member are configured to guide the heat exchanger stop member and the housing stop member into alignment with each other in at least one axis perpendicular to the first direction. Preferably, at least one axis perpendicular to the first direction is two axes perpendicular to the first direction.

With such a configuration, any attaching means for releasably attaching the housing stop member and the heat exchanger stop member to each other may be brought into alignment with each other such that they may be easily attached by the servicer.

In one embodiment, the housing stop member and the heat exchanger stop member are configured to limit the translation in the first direction of the heat exchanger relative to the housing.

With such a configuration, the housing stop member and the heat exchanger stop member cooperate to limit further translation of the heat exchanger in the first direction such that, during remounting, it is possible to protect the heat exchanger from damage due to unwanted contact with other components of the housing.

In one embodiment, the housing stop member comprises a plate having a plane perpendicular to the first direction. In one embodiment, the plate of the housing stop member may comprise one or more holes for receiving an attaching element. In one embodiment, heat exchanger stop member comprises a plate having a plane perpendicular to the first direction when the heat exchanger is at least partially inserted into the housing. In one embodiment, the plate of the heat exchanger stop member may comprise one or more holes for receiving an attaching element. In one embodiment, the housing guide member and the heat exchanger guide member are configured to guide the one or more holes of the heat exchanger stop member and the one or more holes of the housing stop member into alignment with each other as the heat exchanger is translated in the first direction relative to the housing.

With such configurations, it is possible to more forcefully limit the translation in the first direction of the heat exchanger such that even if the heat exchanger is translated by the servicer with great force, the stop members may still limit the motion. Moreover, with such configurations, it is possible to better support the heat exchanger once it is mounted.

In one embodiment, the heat exchanger has a first half and a second half opposite to the first half along an axis of the heat exchanger perpendicular to the first direction when the heat exchanger is at least partially inserted into the housing. The first half is heavier than the second half. The heat exchanger guide member is in the first half. Preferably, the heat exchanger is configured such that air may flow along the axis of the heat exchanger perpendicular to the first direction. In one embodiment, the heat exchanger stop member is in the second half.

Typically, when handling the heat exchanger, the heavier side of the heat exchanger is held by the servicer. Accordingly, with such a configuration, as the heat exchanger guide member is in the first half of the heat exchanger, the heat exchanger guide member may be more easily controlled by the servicer such that the initial approximate alignment of the heat exchanger guide member with the housing guide member can be more easily performed.

In one embodiment, the housing guide member is configured to receive the heat exchanger guide member. The housing guide member is configured to guide the heat exchanger guide member as the heat exchanger is translated in the first direction relative to the housing.

With such configuration, as the housing guide member guides the heat exchanger guide member, the heat exchanger is aligned with the housing and, in turn, the heat exchanger stop member and the housing stop member are brought into alignment with each other.

In one embodiment, the housing guide member forms a narrowing channel defining a wide end and a narrow end. The housing guide member is configured to receive the heat exchanger guide member in the wide end of the narrowing channel as the heat exchanger is translated in the first direction relative to the housing. In one embodiment, the narrowing channel may continuously narrow at least in one portion between the wide end and the narrow end. In one embodiment, the narrowing channel may be open at the narrow end.

With such configurations, during the initial approximate alignment of the guide members, the heat exchanger guide member may easily be received in the housing guide member.

In one embodiment, the duct-type heat exchanger system comprises a first and second of said housing guide member. The narrowing channel of the first housing guide member and the narrowing channel of the second housing guide member each have a first side and a second side. On the wide end of the narrowing channels the first side extends past the second side in a direction along an axis parallel to the first direction. The first side of the narrowing channel of the first housing guide member faces the first side of the narrowing channel of the second housing guide member. In one embodiment, the duct-type heat exchanger system comprises a first and second of said heat exchanger guide member. The first housing guide member and the first heat exchanger guide member may be configured to guide the heat exchanger stop member and the housing stop member into alignment with each other as the heat exchanger is translated in the first direction relative to the housing. The second housing guide member and the second heat exchanger guide member may be configured to guide the heat exchanger stop member and the housing stop member into alignment with each other as the heat exchanger is translated in the first direction relative to the housing.

With such configurations, a greater misalignment between the initial approximate alignment of the guide members and the correct alignment may still result in the correct alignment of the stop members. Specifically, interaction between only one of the first and second housing guide members with their corresponding heat exchanger guide members may result in the alignment of the other of the guide members.

In one embodiment, the heat exchanger guide member comprises a plate configured to be received in the narrowing channel of the housing guide member.

With such a configuration, the plate of the heat exchanger guide member may result in a torsional force being applied to the heat exchanger such that the guide members align the stop members with each other in two axes perpendicular to the first direction.

In one embodiment, the plate is elongate along an axis parallel to the first direction when the heat exchanger is at least partially inserted into the housing.

In one embodiment, the heat exchanger guide member comprises a plate with a tapering edge portion.

In one embodiment, the housing is further configured to support the heat exchanger.

In one embodiment, the duct-type heat exchanger system further comprises a first duct and a second duct.

In one embodiment, the housing guide member and the heat exchanger guide member are releasably attachable to each other.

In one embodiment, the housing guide member and the heat exchanger guide member are configured to limit the translation in the first direction of the heat exchanger relative to the housing.

In one embodiment, the duct-type heat exchanger system comprises a first and a second of said housing guide member, and a first and a second of said heat exchanger guide member. The first housing guide member and the first heat exchanger guide member may be configured to guide the heat exchanger stop member and the housing stop member into alignment with each other as the heat exchanger is translated in the first direction relative to the housing. The second housing guide member and the second heat exchanger guide member may be configured to guide the heat exchanger stop member and the housing stop member into alignment with each other as the heat exchanger is translated in the first direction relative to the housing.

In one embodiment, the duct-type heat exchanger system comprises a first and a second of said housing stop member, and a first and a second of said heat exchanger stop member. The first housing stop member and the first heat exchanger stop member may be configured to be releasably attachable to each other. The second housing stop member and the second heat exchanger stop member are configured to be releasably attachable to each other.

Further features and effects of the duct-type heat exchanger system according to the present invention will be evident from the following description of certain embodiments. In the description of these embodiments, reference is made to the accompanying drawings.

### Brief Description of the Drawings

For a better understanding of the present invention and to show how the same may be carried into effect, reference will now be made, by way of example only, to the accompanying drawings, in which:
Figure 1 shows a perspective view of a duct-type heat exchanger system;
Figure 2 shows a top view of the duct-type heat exchanger system;
Figure 3 shows a housing of the duct-type heat exchanger system with a heat exchanger of duct-type heat exchanger system removed;
Figure 4 shows a housing stop member of the housing;
Figure 5 shows a heat exchanger stop member of the heat exchanger;
Figures 6 and 7 show a housing guide member of the housing;
Figure 8 shows a heat exchanger guide member of the heat exchanger; and
Figure 9 shows the heat exchanger guide member of the heat exchanger inserted into the housing guide member of the housing.

### Detailed Description

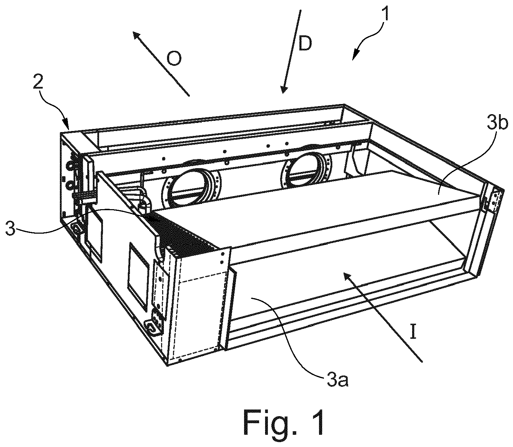

Figure 1 shows a perspective view of a duct-type heat exchanger system 1. The duct-type heat exchanger system 1 has a housing 2 and a heat exchanger 3 (heat source heat exchanger). In the configuration shown in Figure 1, the heat exchanger 3 is inserted into the housing 2. The heat exchanger is mounted to the housing 2 such that relative movement between the housing 2 and the heat exchanger is limited.

The housing 2 may be configured to be mounted indoors such as within a false ceiling or wall. Once the housing 2 is mounted, the housing 2 must be able to support the weight of the heat exchanger 3 when the heat exchanger 3 is mounted within the housing 2.

The heat exchanger 3 may be dismounted from the housing 2 when required, for example, it may be dismounted by a servicer when servicing of the heat exchanger 3 is required. When the heat exchanger 3 is to be remounted in the housing 2, the servicer may translate in a first direction D, the heat exchanger 3 relative to the housing 2. This may result in the heat exchanger 3 being at least partially inserted into the housing 2. Once the heat exchanger 3 is fully inserted into the housing 2, the servicer may attach the heat exchanger 3 to the housing 2 (see below).

As a non-limiting example, the heat exchanger 3 consists of a lower heat exchanger element 3a and an upper heat exchanger element 3b which are positioned relative to each other to form the shape of a 'V' in a side view or cross-sectional view. The heat exchanger 3 is configured to condition air passing through the heat exchanger 3. In particular, heat energy is transferred between the heat exchanger 3 and air passing through the heat exchanger 3. Any suitable heat exchanger may be used with the present invention, for example, a typical heat exchanger consisting of only one heat exchanger element.

The duct-type heat exchanger system 1 is configured to receive air via a first duct (not shown). The air is then conditioned by the heat exchanger 3. Finally, the air leaves the duct-type heat exchanger system 1 via a second duct (not shown). Accordingly, air flows into the duct-type heat exchanger system 1 along the direction I and flows out of the duct-type heat exchanger system 1 along the direction O. The net airflow through the duct-type heat exchanger system 1 defines an airflow direction.

The duct-type heat exchanger system 1 defines three mutually perpendicular axes. The first axis of the duct-type heat exchanger system 1 is parallel to the first direction D. The second axis of the duct-type heat exchanger system 1 is parallel to the airflow direction. The third axis of the duct-type heat exchanger system 1 is perpendicular to the first direction D and perpendicular to the airflow direction. The housing 2 defines a first axis, a second axis and a third axis which correspond to the three axes of the duct-type heat exchanger system 1 when the heat exchanger 3 is at least partially inserted into the housing 2. The heat exchanger 3 defines a first axis, a second axis and a third axis which correspond to the three axes of the duct-type heat exchanger system 1 when the heat exchanger 3 is at least partially inserted into the housing 2.

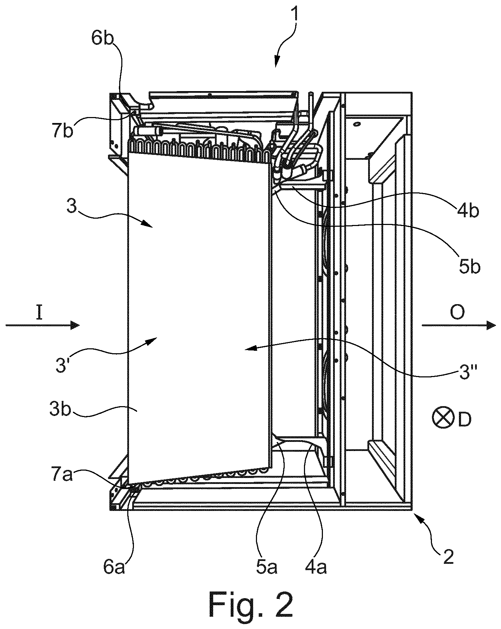

Figure 2 shows a top view of the duct-type heat exchanger system 1.

The housing 2 has a first housing stop member 4a and a second housing stop member 4b. The heat exchanger 3 has a first heat exchanger stop member 5a and a second heat exchanger stop member 5b. The first housing stop member 4a is configured to limit the translation in the first direction D of the first heat exchanger stop member 5a. Similarly, the second housing stop member 4b is configured to limit the translation in the first direction D of the second heat exchanger stop member 5b. Accordingly, the first housing stop member 4a and the first heat exchanger stop member 5a cooperate to limit the translation of the heat exchanger 3 in the first direction D relative to the housing 2. Similarly, the second housing stop member 4b and the second heat exchanger stop member 5b cooperate to limit the translation in the first direction D of the heat exchanger 3 relative to the housing 2.

The first housing stop member 4a and the first heat exchanger stop member 5a are configured to be releasably attachable to each other. Once the first housing stop member 4a and the first heat exchanger stop member 5a are attached to each other, movement of the heat exchanger 3 relative to the housing 2 is limited. Accordingly, movement of the heat exchanger 3 may be limited in a direction opposite to the first direction D and/or in two axes perpendicular to the first direction D. Similarly, the second housing stop member 4b and the second heat exchanger stop member 5b are configured to be releasably attachable to each other.

The first housing stop member 4a and the second housing stop member 4b are disposed along the third axis of the housing 2.

The first heat exchanger stop member 5a and the second heat exchanger stop member 5b are disposed along the third axis of the heat exchanger 3.

Housing 2 has a first housing guide member 6a and a second housing guide member 6b. Heat exchanger 3 has a first heat exchanger guide member 7a and a second heat exchanger guide member 7b. The first housing guide member 6a and the first heat exchanger guide member 7a are configured to guide the heat exchanger 3 into alignment with the housing 2 such that heat exchanger stop members 5a, 5b and the housing stop members 4a, 4b are brought into alignment with each other. Similarly, the second housing guide member 6b and the second heat exchanger guide member 7b are configured to guide the heat exchanger 3 into alignment with the housing 2 such that heat exchanger stop members 5a, 5b and the housing stop members 4a, 4b are brought into alignment with each other. Alignment occurs as the heat exchanger 3 is translated in the first direction D relative to the housing 2.

Specifically, during remounting of the heat exchanger 3 in the housing 2, initially the servicer may approximately align the heat exchanger 3 with the housing 2 such that at least one of the heat exchanger guide members 7a, 7b are approximately aligned with at least one of the housing guide members 6a, 6b. Subsequently, the servicer may then translate in the first direction D, the heat exchanger 3 relative to the housing 2. Once the heat exchanger guide members 7a, 7b come into contact with at least one of the housing guide members 6a, 6b, they cooperate with each other to align the heat exchanger 3 with the housing 2 as the heat exchanger 3 is translated. If one of the heat exchanger guide members 7a, 7b and corresponding housing guide members 6a, 6b are not in contact with each other, they will be brought into contact with each other during this alignment. During this alignment, the heat exchanger stop members 5a, 5b and corresponding housing stop members 4a, 4b are aligned with each other such that they may be attached to other another.

The first housing guide member 6a and the second housing guide member 6b are disposed along the third axis of the housing 2.

The first heat exchanger guide member 7a and the second heat exchanger guide member 7b are disposed along the third axis of the heat exchanger 3.

The first housing stop member 4a and the first housing guide member 6a are disposed along the second axis of the housing 2.

The first heat exchanger stop member 5a and the first heat exchanger guide member 7a are disposed along the second axis of the heat exchanger 3.

The second housing stop member 4b and the second housing guide member 6b are disposed along the second axis of the housing 2.

The second heat exchanger stop member 5b and the second heat exchanger guide member 7b are disposed along the second axis of the heat exchanger 3.

The first housing stop member 4a and the first heat exchanger stop member 5a are both disposed downstream along the airflow direction relative to the first housing guide member 6a and the first heat exchanger guide member 7a when the heat exchanger 3 is mounted in the housing 2.

The second housing stop member 4b and the second heat exchanger stop member 5b are both disposed downstream along the airflow direction relative to the second housing guide member 6b and the second heat exchanger guide member 7b when the heat exchanger 3 is mounted in the housing 2.

The heat exchanger 3 has a first half 3' and a second half 3". The first half 3' is upstream along the airflow direction relative to the second half 3". The first half 3' is opposite to the second half 3" along an axis of the heat exchanger 3 perpendicular to the first direction D when the heat exchanger 3 is at least partially inserted into the housing 2. The first half 3' of the heat exchanger 3 is heavier than the second half 3" of the heat exchanger 3. At least one of the heat exchanger guide members 7a, 7b (and in the configuration shown in Figure 2, both heat exchanger guide members 7a, 7b) are disposed in the first half 3'. When handling the heat exchanger 3, the heavier side of the heat exchanger 3 is likely to be held by the servicer. Accordingly, with such a configuration, the first half 3' of the heat exchanger 3 is likely to be held by the servicer when remounting the heat exchanger 3. Hence, as at least one of the heat exchanger guide members 7a, 7b is disposed in the first (heavier) half 3', the at least one heat exchanger guide member 7a, 7b may be more easily controlled by the servicer such that the initial approximate alignment of the at least one heat exchanger guide member 7a, 7b with the corresponding housing guide member 6a, 6b can be more easily performed.

The specific forms of the housing stop members 4a, 4b, the heat exchanger stop members 5a, 5b, the housing guide members 6a, 6b and the heat exchanger guide members 7a, 7b, will be further described hereinbelow.

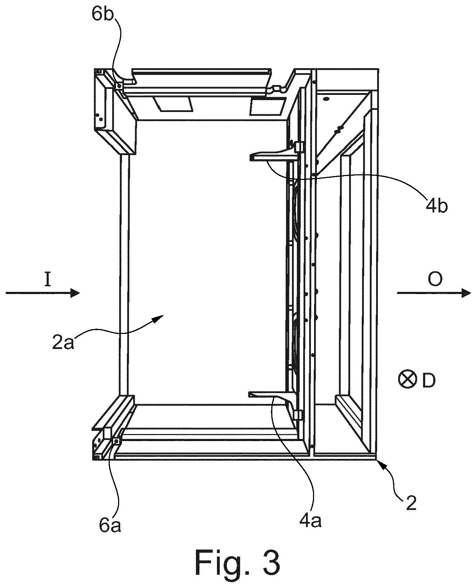

Figure 3 shows the housing 2 with the heat exchanger 3 removed. The housing 2 defines an interior portion 2a.

Referring to Figure 3, the locations of the first housing stop member 4a, the second housing stop member 4b, the first housing guide member 6a and the second housing guide member 6b, of the housing 2, can be clearly seen.

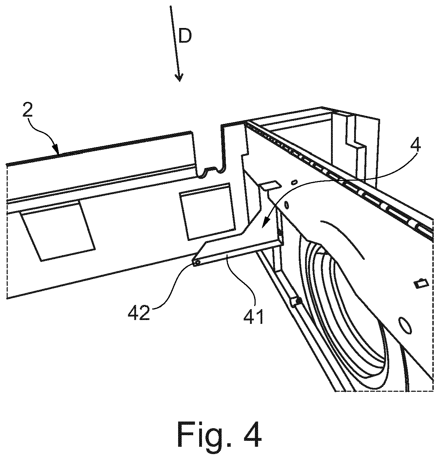

Figure 4 shows a housing stop member 4 of the housing 2. The housing stop member 4 may be the first housing stop member 4a or the second housing stop member 4b. Accordingly, the below description relating to housing stop member 4 applies to the first housing stop member 4a and/or the second housing stop member 4b.

Housing stop member 4 has a plate 41. The plate 41 has a plane perpendicular to the first direction D. The plate 41 may be fixed relative to the housing 2 by any means known to the skilled person.

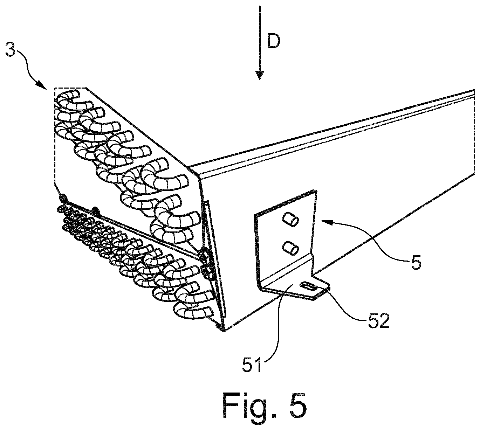

The housing stop member 4 may have an attaching means configured to attach to a corresponding attaching means of the heat exchanger stop member 5 (see Figure 5). In Figure 4, the attaching means of the housing stop member 4 comprises a hole 42 formed in the plate 41. The hole 42 may be configured to receive an attaching element such as a screw or a pin.

Figure 5 shows a heat exchanger stop member 5 of the heat exchanger 3. The heat exchanger stop member 5 may be the first heat exchanger stop member 5a or the second heat exchanger stop member 5b. Accordingly, the below description relating to heat exchanger stop member 5 applies to the first heat exchanger stop member 5a and/or the second heat exchanger stop member 5b.

The heat exchanger stop member 5 has a plate 51. The plate has a plane perpendicular to the first axes of the heat exchanger 3. The plate 51 may be fixed relative to the heat exchanger 3 by any means known to the skilled person.

The heat exchanger stop member 5 may have an attaching means configured to attach to a corresponding attaching means of the housing stop member 4 (see Figure 4). In Figure 5, the attaching means of the heat exchanger stop member 5 comprises a hole 52 formed in the plate 51. The hole 52 may be configured to receive an attaching element such as a screw or a pin.

The plate 41 of the housing stop member 4 is configured to mate with the plate 51 of the heat exchanger stop member 5 when the heat exchanger 3 is inserted into the housing 2. The plate 41 of the housing stop member 4 and the plate 51 of the heat exchanger stop member 5 are configured to be releasably attachable to each other by any means, such as an attaching element such as a screw or a pin. Once the plates 41, 51 are attached, the housing stop member 4 and the heat exchanger stop member 5 cooperate to limit the movement of the heat exchanger 3 relative to the housing 2 such that the housing 2 supports the heat exchanger 3.

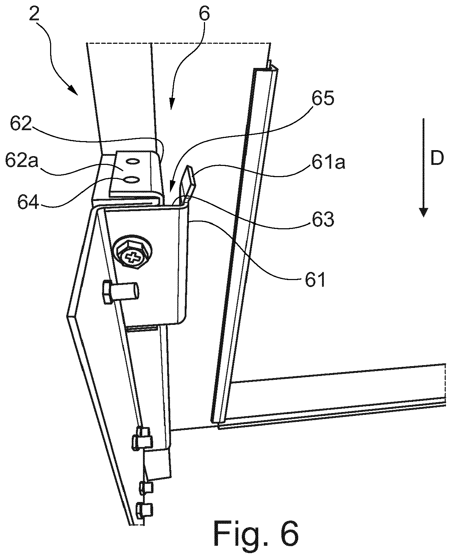

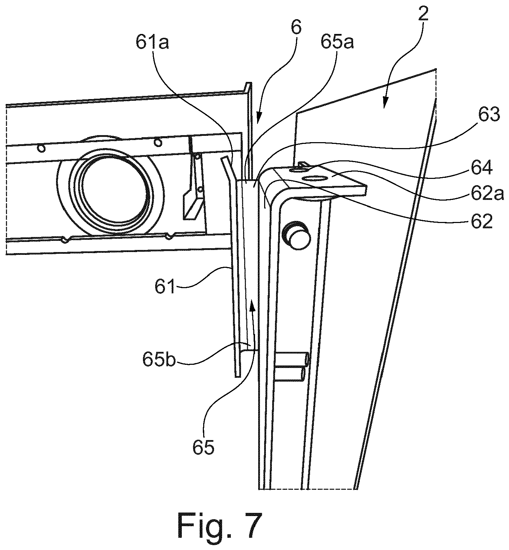

Figures 6 and 7 show a housing guide member 6 of the housing 2. The housing guide member 6 may be the first housing guide member 6a or the second housing guide member 6b. Accordingly, the below description relating to housing guide member 6 applies to the first housing guide member 6a and/or the second housing guide member 6b.

The housing guide member 6 may be fixed relative to the housing 2 by any means known to the skilled person.

The housing guide member 6 has a first side 61, a second side 62 and a third side 63. The third side 63 is optional.

The second side 62 forms a plate 62a. The plate 62a defines a plane which is perpendicular to the first direction D.

The first side 61 and the second side 62 together form a narrowing channel 65. The narrowing channel 65 extends along the first direction D. The narrowing channel 65 defines a wide end 65a and a narrow end 65b (see Figure 7). The wide end 65a is disposed upstream in the first direction D relative to the narrow end 65b. The first side 61 and the second side 62 are configured such that the narrowing channel 65 generally continuously narrows from the wide end 65a to the narrow end 65b.

The first side 61 of the housing guide member 6 extends past the second side 62 on the wide end 65a of the narrowing channel 65. Optionally, a portion of the first side 61 which extends past the second side 62 defines an angled portion 61a of the first side 61. The angled portion 61a is angled away from the second side 62.

The first side 61 of the housing guide member 6 faces the interior portion 2a of the housing 2. In the case where the first housing guide member 6a and the second housing guide member 6b are in the form of the housing guide member 6, the first side 61 of the first housing guide member 6a faces the first side 61 of the second housing guide member 6b.

With such a configuration, during translation of the heat exchanger 3 in the first direction D, even if only one of the heat exchanger guide members 7a, 7b come into contact with their corresponding housing guide members 6a, 6b, the portion of the first side 61 which extends past the second side 62 will enable the alignment of the other of heat exchanger guide member 7a, 7b and their corresponding housing guide member 6a, 6b, without any hindrance from the second side 62.

The housing guide member 6 may have a third side 63. The third side 63 is perpendicular to the first side 61 and the second side 62.

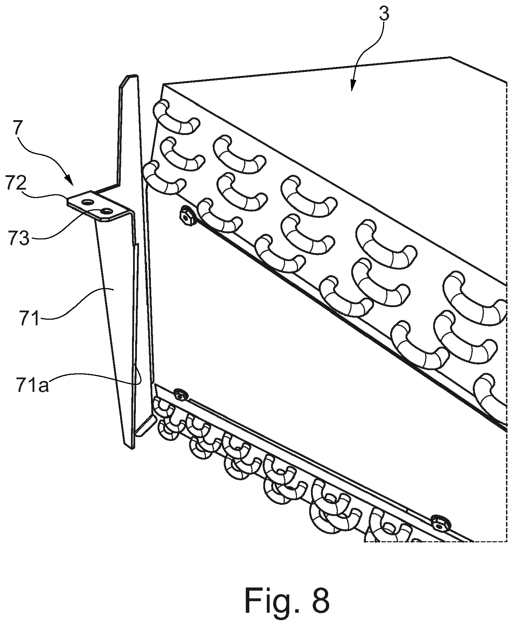

The housing guide member 6 may have an attaching means configured to attach to a corresponding attaching means of the heat exchanger guide member 7 (see Figure 8). In Figures 6 and 7, the attaching means of the housing guide member 6 comprises at least one hole 64 formed in the plate 62a. Each of the at least one holes 64 may be configured to receive an attaching element such as a screw or a pin.

Figure 8 shows a heat exchanger guide member 7 of the heat exchanger 3. The heat exchanger guide member 7 may be the first heat exchanger guide member 7a or the second heat exchanger guide member 7b. Accordingly, the below description relating to heat exchanger guide member 7 applies to the first heat exchanger guide member 7a and/or the second heat exchanger guide member 7b.

The heat exchanger guide member 7 may be fixed relative to the heat exchanger 3 by any means known to the skilled person.

The heat exchanger guide member 7 has a first plate 71. The first plate 71 defines a plane which is parallel to the first-second axes plane of the heat exchanger 3. The first plate 71 has a tapered edge 71a.

The tapered edge 71a of the first plate 71 contacts the third side 63 of the housing guide member 6. The tapered edge 71a and the third side 63 cooperate to align the heat exchanger 3 along the second axis of the housing 2.

The heat exchanger guide member 7 has a second plate 72. The second plate 72 is optional. The second plate 72 defines a plane which is perpendicular to the first direction D when the heat exchanger 3 is at least partially inserted into the housing 2.

The heat exchanger guide member 7 may have an attaching means configured to attach to a corresponding attaching means of the housing guide member 6 (see Figures 6 and 7) . In Figure 8, the attaching means of the heat exchanger guide member 7 comprises at least one hole 73 formed in the second plate 72.

Each of the at least one holes 73 may be configured to receive an attaching element such as a screw or a pin.

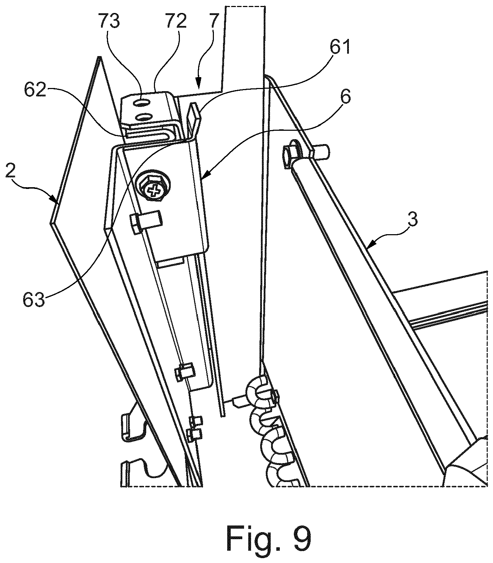

Figure 9 shows the heat exchanger guide member 7 of the heat exchanger 3 inserted into the housing guide member 6 of the housing 2.

In such a configuration, the second side plate 62a of the housing guide member 6 mates with the second plate 72 of the heat exchanger guide member 7. With such a configuration, the plate 62a of the housing guide member 6 and the second plate 72 of the heat exchanger guide member 7 are configured to be releasably attachable to each other by any means, such as an attaching element such as a screw or a pin. In this configuration, holes 64 formed in the second side plate 62a align with holes 73 formed in the second plate 72 such that the attaching element may be passed through both holes 64, 73. Once the plates 62a, 72 are attached, the housing guide member 6 and the heat exchanger guide member 7 cooperate to limit the movement of the heat exchanger 3 relative to the housing 2 such that the housing 2 supports the heat exchanger 3.

Although the above explanation is considered to fully clarify how the present invention may straightforwardly be put into effect by those skilled in the art, it is to be regarded as purely exemplary.

In particular, there are a number of variations which are possible, as may be appreciated by those skilled in the art.

For example, one, two, or more housing stop members 4 together with corresponding heat exchanger stop members 5 may be provided in combination with one, two, or more housing guide members 6 together with corresponding heat exchanger guide members 7. These may be located in any suitable manner.

Furthermore, the housing guide member 6 and the heat exchanger guide member 7 may not be releasably attachable to each other, and may only perform the task of aligning the heat exchanger 3 with the housing 2.

Furthermore, the specific forms of the housing stop member 4 and the heat exchanger stop member 5 may be varied considerably, as long as they are releasably attachable to each other.

Furthermore, the specific forms of the housing guide member 6 and the heat exchanger guide member 7 may be varied considerably, as long as they are configured to guide the heat exchanger stop member 5 and the housing stop member 4 into alignment with each other as the heat exchanger 3 is translated in the first direction D relative to the housing 2.

Furthermore, the locations of the housing stop members 4, heat exchanger stop members 5, housing guide members 6 and heat exchanger guide members 7 may be varied.

All of the above are fully within the scope of the present invention, and are considered to form the basis for alternative embodiments in which one or more combinations of the above-described features are applied, without limitation to the specific combinations disclosed above.

## Claims

1. A duct-type heat exchanger system comprising:
a housing (2) comprising a housing stop member (4) and a housing guide member (6); and
a heat exchanger (3) comprising a heat exchanger stop member (5) and a heat exchanger guide member (7), wherein:
the housing (2) is configured such that the heat exchanger (3) is at least partially insertable into the housing (2) by a translation in a first direction (D) of the heat exchanger (3) relative to the housing (2);
the housing stop member (4) and the heat exchanger stop member (5) are configured to be releasably attachable to each other; and
the housing guide member (6) and the heat exchanger guide member (7) are configured to guide the heat exchanger stop member (5) and the housing stop member (4) into alignment with each other as the heat exchanger (3) is translated in the first direction (D) relative to the housing (2).

2. The duct-type heat exchanger system of claim 1, wherein the housing guide member (6) and the heat exchanger guide member (7) are configured to guide the heat exchanger stop member (5) and the housing stop member (4) into alignment with each other in at least one axis perpendicular to the first direction (D).

3. The duct-type heat exchanger system of any preceding claim, wherein the housing stop member (4) and the heat exchanger stop member (5) are configured to limit the translation in the first direction (D) of the heat exchanger (3) relative to the housing (2).

4. The duct-type heat exchanger system of any preceding claim, wherein the heat exchanger (3) has a first half (3') and a second half (3") opposite to the first half (3') along an axis of the heat exchanger (3) perpendicular to the first direction (D) when the heat exchanger (3) is at least partially inserted into the housing (2), wherein the first half (3') is heavier than the second half (3"), and wherein the heat exchanger guide member (7) is in the first half (3').

5. The duct-type heat exchanger system of any preceding claim, wherein housing guide member (6) is configured to receive the heat exchanger guide member (7), and wherein the housing guide member (6) is configured to guide the heat exchanger guide member (7) as the heat exchanger (3) is translated in the first direction (D) relative to the housing (2).

6. The duct-type heat exchanger system of any preceding claim, wherein the housing guide member (6) forms a narrowing channel (65) defining a wide end (65a) and a narrow end (65b), and wherein the housing guide member (6) is configured to receive the heat exchanger guide member (7) in the wide end (65a) of the narrowing channel (65) as the heat exchanger (3) is translated in the first direction (D) relative to the housing (2).

7. The duct-type heat exchanger system of claim 6, comprising a first (6a) and a second (6b) of said housing guide member (6), wherein the narrowing channel (65) of the first housing guide member (6a) and the narrowing channel (65) of the second housing guide member (6b) each have a first side (61) and a second side (62), and wherein, on the wide end (65a) of the narrowing channels (65) the first side (61) extends past the second side (62) in a direction along an axis parallel to the first direction (D), the first side (61) of the narrowing channel (65) of the first housing guide member (6a) facing the first side (61) of the narrowing channel (65) of the second housing guide member (6b).

8. The duct-type heat exchanger system of claim 6 or 7, wherein the heat exchanger guide member (7) comprises a plate (71) configured to be received in the narrowing channel (65) of the housing guide member (6).

9. The duct-type heat exchanger system of claim 8, wherein the plate (71) is elongate along an axis parallel to the first direction (10) when the heat exchanger (3) is at least partially inserted into the housing (2).

10. The duct-type heat exchanger system of any preceding claim, comprising two or more of said housing stop members (4) and two or more of said heat exchanger stop members (5), respectively.

11. The duct-type heat exchanger system of any preceding claim, comprising two or more of said housing guide members (6) and two or more of said heat exchanger guide members (7) respectively.

12. The duct-type heat exchanger system of any preceding claim, wherein the housing guide member (6) and the heat exchanger guide member (7) are configured to be releasably attachable to each other.

## Patentansprüche

1. Röhrenartiges Wärmetauscher-System, umfassend:
ein Gehäuse (2), das ein Gehäuseanschlagelement (4) und ein Gehäuseführungselement (6) umfasst; und
einen Wärmetauscher (3), der ein Wärmetauscher-Anschlagelement (5) und ein Wärmetauscher-Führungselement (7) umfasst, wobei:
das Gehäuse (2) ausgebildet ist, sodass der Wärmetauscher (3) durch eine Verschiebung in eine erste Richtung (D) des Wärmetauschers (3) relativ zum Gehäuse (2) mindestens teilweise in das Gehäuse (2) einfügbar ist;
das Gehäuseanschlagelement (4) und das Wärmetauscher-Anschlagelement (5) ausgebildet sind, um lösbar aneinander befestigt zu werden; und
das Gehäuseführungselement (6) und das Wärmetauscher-Führungselement (7) ausgebildet sind, um das Wärmetauscher-Anschlagelement (5) und das Gehäuseanschlagelement (4) in Ausrichtung zueinander zu führen, wenn der Wärmetauscher (3) in die erste Richtung (D) relativ zum Gehäuse (2) verschoben wird.

2. Röhrenartiges Wärmetauscher-System nach Anspruch 1, wobei das Gehäuseführungselement (6) und das Wärmetauscher-Führungselement (7) ausgebildet sind, um das Wärmetauscher-Anschlagelement (5) und das Gehäuseanschlagelement (4) entlang mindestens einer zur ersten Richtung (D) senkrechten Achse in Ausrichtung zueinander zu bringen.

3. Röhrenartiges Wärmetauscher-System nach einem der vorstehenden Ansprüche, wobei das Gehäuseanschlagelement (4) und das Wärmetauscher-Anschlagelement (5) ausgebildet sind, um die Verschiebung des Wärmetauschers (3) in die erste Richtung (D) relativ zum Gehäuse (2) zu begrenzen.

4. Röhrenartiges Wärmetauscher-System nach einem der vorstehenden Ansprüche, wobei der Wärmetauscher (3) eine erste Hälfte (3') und eine zweite Hälfte (3") aufweist, die der ersten Hälfte (3') entlang einer zur ersten Richtung (D) senkrechten Achse des Wärmetauschers (3) gegenüberliegt, wenn der Wärmetauscher (3) mindestens teilweise in das Gehäuse (2) eingefügt ist, wobei die erste Hälfte (3') schwerer ist als die zweite Hälfte (3") und wobei das Wärmetauscher-Führungselement (7) sich in der ersten Hälfte (3') befindet.

5. Röhrenartiges Wärmetauscher-System nach einem der vorstehenden Ansprüche, wobei das Gehäuseführungselement (6) ausgebildet ist, um das Wärmetauscher-Führungselement (7) aufzunehmen und wobei das Gehäuseführungselement (6) ausgebildet ist, um das Wärmetauscher-Führungselement (7) zu führen, wenn der Wärmetauscher (3) in die erste Richtung (D) relativ zum Gehäuse (2) verschoben wird.

6. Röhrenartiges Wärmetauscher-System nach einem der vorstehenden Ansprüche, wobei das Gehäuseführungselement (6) einen sich verjüngenden Kanal (65) bildet, der ein breites Ende (65a) und ein schmales Ende (65b) definiert, und wobei das Gehäuseführungselement (6) ausgebildet ist, um das Wärmetauscher-Führungselement (7) im breiten Ende (65a) des sich verjüngenden Kanals (65) aufzunehmen, wenn der Wärmetauscher (3) in die erste Richtung (D) relativ zum Gehäuse (2) verschoben wird.

7. Röhrenartiges Wärmetauscher-System nach Anspruch 6, das ein erstes (6a) und ein zweites (6b) dieser Gehäuseführungselemente (6) umfasst, wobei der sich verjüngende Kanal (65) des ersten Gehäuseführungselements (6a) und der sich verjüngende Kanal (65) des zweiten Gehäuseführungselements (6b) jeweils eine erste Seite (61) und eine zweite Seite (62) aufweisen und wobei sich die erste Seite (61) am breiten Ende (65a) des sich verjüngenden Kanals (65) über die zweite Seite (62) hinaus in eine Richtung entlang einer zur ersten Richtung (D) parallelen Achse erstreckt, wobei die erste Seite (61) des sich verjüngenden Kanals (65) des ersten Gehäuseführungselements (6a) der ersten Seite (61) des sich verjüngenden Kanals (65) des zweiten Gehäuseführungselements (6b) zugewandt ist.

8. Röhrenartiges Wärmetauscher-System nach Anspruch 6 oder 7, wobei das Wärmetauscher-Führungselement (7) eine Platte (71) umfasst, die ausgebildet ist, um im sich verjüngenden Kanal (65) des Gehäuseführungselements (6) aufgenommen zu werden.

9. Röhrenartiges Wärmetauscher-System nach Anspruch 8, wobei die Platte (71) sich entlang einer der ersten Richtung (10) parallelen Achse verlängert, wenn der Wärmetauscher (3) mindestens teilweise im Gehäuse (2) eingefügt ist.

10. Röhrenartiges Wärmetauscher-System nach einem der vorstehenden Ansprüche, das zwei oder mehr dieser Gehäuseanschlagelemente (4) bzw. zwei oder mehr dieser Wärmetauscher-Anschlagelemente (5) umfasst.

11. Röhrenartiges Wärmetauscher-System nach einem der vorstehenden Ansprüche, das zwei oder mehr dieser Gehäuseführungselemente (6) bzw. zwei oder mehr dieser Wärmetauscher-Führungselemente (7) umfasst.

12. Röhrenartiges Wärmetauscher-System nach einem der vorstehenden Ansprüche, wobei das Gehäuseführungselement (6) und das Wärmetauscher-Führungselement (7) ausgebildet sind, um lösbar aneinander befestigt zu werden.

## Revendications

1. Système d'échangeur de chaleur de type conduit comprenant :
un logement (2) comprenant un élément de butée de logement (4) et un élément de guidage de logement (6) ; et
un échangeur de chaleur (3) comprenant un élément de butée d'échangeur de chaleur (5) et un élément de guidage d'échangeur de chaleur (7), dans lequel :
le logement (2) est configuré de telle sorte que l'échangeur de chaleur (3) est au moins partiellement insérable dans le logement (2) par une translation dans une première direction (D) de l'échangeur de chaleur (3) par rapport au logement (2) ;
l'élément de butée de logement (4) et l'élément de butée d'échangeur de chaleur (5) sont configurés pour pouvoir être attachés de manière détachable l'un à l'autre ; et
l'élément de guidage de logement (6) et l'élément de guidage d'échangeur de chaleur (7) sont configurés pour guider l'élément de butée d'échangeur de chaleur (5) et l'élément de butée de logement (4) en alignement l'un avec l'autre lorsque l'échangeur de chaleur (3) est déplacé en translation dans la première direction (D) par rapport au logement (2).

2. Système d'échangeur de chaleur de type conduit selon la revendication 1, dans lequel l'élément de guidage de logement (6) et l'élément de guidage d'échangeur de chaleur (7) sont configurés pour guider l'élément de butée d'échangeur de chaleur (5) et l'élément de butée de logement (4) en alignement l'un avec l'autre dans au moins un axe perpendiculaire à la première direction (D).

3. Système d'échangeur de chaleur de type conduit selon l'une quelconque des revendications précédentes, dans lequel l'élément de butée de logement (4) et l'élément de butée d'échangeur de chaleur (5) sont configurés pour limiter la translation dans la première direction (D) de l'échangeur de chaleur (3) par rapport au logement (2).

4. Système d'échangeur de chaleur de type conduit selon l'une quelconque des revendications précédentes, dans lequel l'échangeur de chaleur (3) a une première moitié (3') et une seconde moitié (3") opposée à la première moitié (3') le long d'un axe de l'échangeur de chaleur (3) perpendiculaire à la première direction (D) lorsque l'échangeur de chaleur (3) est au moins partiellement inséré dans le logement (2), dans lequel la première moitié (3') est plus lourde que la seconde moitié (3"), et dans lequel l'élément de guidage d'échangeur de chaleur (7) se trouve dans la première moitié (3').

5. Système d'échangeur de chaleur de type conduit selon l'une quelconque des revendications précédentes, dans lequel l'élément de guidage de logement (6) est configuré pour recevoir l'élément de guidage d'échangeur de chaleur (7), et dans lequel l'élément de guidage de logement (6) est configuré pour guider l'élément de guidage d'échangeur de chaleur (7) lorsque l'échangeur de chaleur (3) est déplacé en translation dans la première direction (D) par rapport au logement (2).

6. Système d'échangeur de chaleur de type conduit selon l'une quelconque des revendications précédentes, dans lequel l'élément de guidage de logement (6) forme un canal à rétrécissement (65) définissant une extrémité large (65a) et une extrémité étroite (65b), et dans lequel l'élément de guidage de logement (6) est configuré pour recevoir l'élément de guidage d'échangeur de chaleur (7) dans l'extrémité large (65a) du canal à rétrécissement (65) lorsque l'échangeur de chaleur (3) est déplacé en translation dans la première direction (D) par rapport au logement (2).

7. Système d'échangeur de chaleur de type conduit selon la revendication 6, comprenant un premier (6a) et un second (6b) dudit élément de guidage de logement (6), dans lequel le canal à rétrécissement (65) du premier élément de guidage de logement (6a) et le canal à rétrécissement (65) du second élément de guidage de logement (6b) ont chacun un premier côté (61) et un second côté (62), et dans lequel, sur l'extrémité large (65a) des canaux à rétrécissement (65), le premier côté (61) s'étend au-delà du second côté (62) dans une direction le long d'un axe parallèle à la première direction (D), le premier côté (61) du canal à rétrécissement (65) du premier élément de guidage de logement (6a) étant orienté vers le premier côté (61) du canal à rétrécissement (65) du second élément de guidage de logement (6b).

8. Système d'échangeur de chaleur de type conduit selon la revendication 6 ou 7, dans lequel l'élément de guidage d'échangeur de chaleur (7) comprend une plaque (71) configurée pour être reçue dans le canal à rétrécissement (65) de l'élément de guidage de logement (6).

9. Système d'échangeur de chaleur de type conduit selon la revendication 8, dans lequel la plaque (71) est allongée le long d'un axe parallèle à la première direction (10) lorsque l'échangeur de chaleur (3) est au moins partiellement inséré dans le logement (2).

10. Système d'échangeur de chaleur de type conduit selon l'une quelconque des revendications précédentes, comprenant respectivement deux ou plus desdits éléments de butée de logement (4) et deux ou plus desdits éléments de butée d'échangeur de chaleur (5).

11. Système d'échangeur de chaleur de type conduit selon l'une quelconque des revendications précédentes, comprenant respectivement deux ou plus desdits éléments de guidage de logement (6) et deux ou plus desdits éléments de guidage d'échangeur de chaleur (7).

12. Système d'échangeur de chaleur de type conduit selon l'une quelconque des revendications précédentes, dans lequel l'élément de guidage de logement (6) et l'élément de guidage d'échangeur de chaleur (7) sont configurés pour pouvoir être attachés de manière détachable l'un à l'autre.
